# NEUE EUROPÄISCHE PATENTSCHRIFT

(11) **EP 1 554 104 B2**
(45) Veröffentlichungstag und Bekanntmachung des Hinweises auf die Entscheidung über den Einspruch: **06.11.2013**
(45) Hinweis auf die Patenterteilung: 30.05.2007
(21) Anmeldenummer: 03757518.0
(22) Anmeldetag: 23.10.2003
(51) Int. Cl.: B29C 47/90, B29C 47/34, B29C 69/00

(54) **VERFAHREN UND VORRICHTUNG ZUR HERSTELLUNG VON KUNSTSTOFFPROFILEN**
METHOD AND DEVICE FOR PRODUCING PLASTIC PROFILES
PROCEDE ET DISPOSITIF POUR PRODUIRE DES PROFILES EN PLASTIQUE

(30) Priorität: 25.10.2002 AT 16232002
(43) Veröffentlichungstag der Anmeldung: 20.07.2005
(73) Patentinhaber: Technoplast Kunststofftechnik Gesellschaft m.b.H., 4563 Micheldorf (AT)
(72) Erfinder: SCHWAIGER, Meinhard, A-4040 Linz (AT); PREINSTORFER, Rüdiger, A-4560 Kirchdorf (AT); JIRKA, Martin, A-4560 Kirchdorf (AT)
(74) Vertreter: Müllner, Martin
(86) Internationale Anmeldenummer: PCT/AT2003/000320
(87) Internationale Veröffentlichungsnummer: WO 2004/037516

(56) Entgegenhaltungen:
- WO-A-96/29186
- DE-A- 3 536 329
- DE-A- 4 117 997
- US-A- 4 276 250
- SMOLUK G R: "DOWNSTREAM HARDWARE KEEPS UP WITH PIPE, TUBING AND PROFILE EXTRUSION" MODERN PLASTICS INTERNATIONAL, MCGRAW-HILL,INC. LAUSANNE, CH, Bd. 18, Nr. 12, 1. Dezember 1988 (1988-12-01), Seiten 49-53, XP000023575 ISSN: 0026-8283
- GRUBER & CO: 'Kundenmagazin Group Up, Ausgabe 1/2001' A+G EXTRUSION TECHNOLOGY GMBH Juli 2001,
- MAGAZIN "EXTRUSION 11/2001" November 2001, Seiten 82,83 - 106
- "KUNSTSTOFFMAGAZIN KM" September 2001, Seite 22
- Zeichnungen A6-d2.00B, ho30d. 00E,PS40d.00E
- 'Messe K'2001 "Kunststoff & Kautschuk" Düsseldorf 2001' A+G EXTRUSION TECHNOLOGY GMBH 2001,

## Beschreibung

Die Erfindung betrifft ein Verfahren zur Herstellung von Kunststoffprofilen gemäß dem Oberbegriff von Patentanspruch 1.

Um die Produktivität bei der Herstellung von Kunststoffprofilen, wie sie zur Herstellung von Fenstern oder dergleichen benötigt werden, zu erhöhen, werden umfangreiche Anstrengungen unternommen, um die Extrusionsgeschwindigkeit zu steigern. Bei höheren Extrusionsgeschwindigkeiten ist jedoch die Einhaltung der erforderlichen Qualitätskriterien mit zunehmenden Schwierigkeiten verbunden, so dass weiteren Erhöhungen Grenzen gesetzt sind, die nur mit unverhältnismäßig großem Aufwand überschritten werden können.

Um die Produktionsleistung einer Produktionslinie zu erhöhen, ist es weiters bekannt, zwei Profile mit geringen Abmessungen gleichzeitig herzustellen. Dabei wird ein Extruder mit einem Extrusionswerkzeug eingesetzt, das zwei getrennte Öffnungen für die beiden Profile aufweist. Auch die Kalibrierwerkzeuge, das heißt die Trockenkalibrierung und die Kalibriertanks, sind für die gleichzeitige Aufnahme von zwei parallel laufenden Profilsträngen ausgebildet. Die beiden Profilstränge werden durch einen gemeinsamen Raupenabzug durch die Kalibrierwerkzeuge gezogen und weiter zu einer Abtrenneinrichtung gefördert, die als Säge oder als Messereinrichtung, d.h. als so genannte Guillotine ausgebildet sein kann. In der Abtrenneinrichtung werden beispielsweise 6 m lange Profilstücke hergestellt, aus denen in weiterer Folge die erforderlichen Profilabschnitte zugeschnitten werden.

Obgleich durch eine solche Doppelstrangextrusion die Kapazität einer Extrusionslinie theoretisch verdoppelt werden kann, kommt es durch die starre Verbindung der beiden Extrusionsvorgänge zu bestimmten Problemen. So ist nachteilig, dass bei sehr vielen Eingriffen in den Produktionsprozess eines Profilstranges der Produktionsprozess des anderen Profilstranges mit beeinflusst wird. Wenn es beispielsweise erforderlich ist, die Extrusionslinie aufgrund von Problemen an einem Strang herunterzufahren, wird auch die Produktion des anderen Profilstranges gestoppt, und es wird beim Wiederanlauf in beiden Extrusionslinien solange Ausschuss produziert, bis sich der Prozess in beiden Linien wieder stabilisiert hat. Weiters ist es in praktischer Hinsicht nur möglich, identische oder annähernd identische Profile gleichzeitig herzustellen, da ansonsten der Extrusionsprozess kaum handhabbar wäre.

Um dieses Problem zu lösen, ist in der WO 96/29186 A vorgeschlagen worden, bei einer Doppelstrangextrusionsanlage zwei voneinander unabhängige Raupenabzüge zu verwenden, um so in jedem Strang die jeweils optimale Extrusionsgeschwindigkeit fahren zu können. Es hat sich jedoch herausgestellt, dass insbesondere bei Störfällen in einem Extrusionsstrang die Möglichkeiten des Eingriffs zu gering sind, so dass der Extrusionsvorgang im anderen Strang oft nachteilig beeinflusst wird.

Ein weiterer Nachteil dieser bekannten Lösungen besteht darin, dass das Anfahren der Produktionslinie besonders heikel ist, da zwei Profile gleichzeitig durch die Extrusionswerkzeuge geführt werden müssen und in Folge aufgerichtet werden müssen, um den Aufbau des Vakuums in den Trockenkalibrierwerkzeugen zu ermöglichen.

Ein weiteres Problem in diesem Zusammenhang besteht darin, dass eine Produktionslinie, die für die Doppelstrangextrusion ausgestattet ist, nur für die Herstellung relativ kleiner Profile geeignet ist, da den Abmessungen bei der gleichzeitigen Herstellung zweier Profilstränge naturgemäß Grenzen gesetzt sind. Eine solche Produktionslinie ist daher wenig flexibel einsetzbar, was den praktischen Nutzen vermindert.

Eine weitere bekannte Lösung ist in der US 5,238,165 A beschrieben, die einen flexiblen Raupenabzug zeigt. Hinsichtlich der Unabhängigkeit mehrerer Extrusionsvorgänge wird hier keine vorteilhafte Lösung angeboten

Aufgabe der vorliegenden Erfindung ist es, diese Nachteile zu vermeiden und ein Verfahren anzugeben, das die gleichzeitige Herstellung von zwei Profilsträngen ermöglicht, jedoch einfacher handhabbar ist, und bei dem geringerer Ausschuss anfällt, das jedoch gleichzeitig eine erhöhte Flexibilität in der Produktionsplanung ermöglicht und eine bessere Maschinenausnützung erlaubt. Eine weitere Aufgabe der Erfindung ist es, Vorrichtungen zur Durchführung eines solchen Verfahrens anzugeben.

Eine weitere Aufgabe der Erfindung ist es, ein Verfahren und eine Vorrichtung anzugeben, die es ermöglichen nach Bedarf auch Profile von besonders großen Abmessungen herstellen zu können.

Erfindungsgemäß werden diese Aufgaben durch ein Verfahren mit den Merkmalen von Patentanspruch 1 gelöst.

Das erfindungsgemäße Verfahren nach Patentanspruch 1 wird dabei so geführt, dass in einem ersten Betriebsmodus die beiden Profilstränge in voneinander getrennten Kalibrierwerkzeugen kalibriert werden, wobei die Abzugsgeschwindigkeiten für die beiden Profilstränge vorzugsweise unabhängig voneinander einstellbar sind, und dass in einem zweiten Betriebsmodus ein einzelner Profilstrang hergestellt wird.

Grundgedanke der vorliegenden Erfindung ist die Entkoppelung der Herstellungsprozesse, so dass es möglich ist, jeden der beiden Profilstränge in optimaler Weise herzustellen. Ein wesentliches Kriterium dafür ist, dass die Abzugsgeschwindigkeiten der beiden Profilstränge unabhängig voneinander sind. Dies kann so weit gehen, dass bei Auftreten von Problemen bei Werkzeugswechseln oder dergleichen der Extrusionsvorgang auf einer Extrusionslinie bis zum Stillstand heruntergefahren werden kann, ohne den Produktionsvorgang des anderen Profilstranges zu beeinflussen oder zu stören. Da die Kalibrierwerkzeuggruppen für die Profilstränge in Längsrichtung verfahren werden können, können Arbeiten und Einstellungen an einem Strang vorgenommen werden, ohne den Extrusionsvorgang am anderen Strang zu stören.

Gleichzeitig wird dabei jedoch auch ohne aufwendige Umbaumaßnahmen die Herstellung von Profilen mit größeren Abmessungen ermöglicht.

Es ist grundsätzlich möglich, dass die beiden Profilstränge auf einem gemeinsamen Extruder hergestellt werden. Ein solcher gemeinsamer Extruder kann beispielsweise zwei getrennte Extrusionswerkzeuge, d.h. Extrusionsdüsen, aufweisen oder eine gemeinsame Extrusionsdüse mit zwei Öffnungen. Um unterschiedliche Extrusionsgeschwindigkeiten realisieren zu können, sollte ein solcher Extruder mit einer Verteileinrichtung ausgestattet sein, die es ermöglicht, den Massenstrom der Kunststoffschmelze in einem wählbaren Verhältnis auf die beiden Extrusionsöffnungen aufzuteilen.

Besonders bevorzugt ist es, wenn die beiden Profilstränge auf zwei voneinander unabhängigen Extrudern hergestellt werden. Auf diese Weise ist es möglich, eine tatsächliche Unabhängigkeit der Produktionsprozesse der beiden Profilstränge zu erreichen.

Um die erwünschte Produktivitätssteigerung bei vorgegebenen Außenabmessungen einer Extrusionslinie realisieren zu können, ist es gemäß der vorliegenden Erfindung vorgesehen, dass die beiden Profilstränge in Kalibrierwerkzeugen kalibriert werden, die auf einem gemeinsamen Kalibriertisch angeordnet sind. In dem gemeinsamen Kalibriertisch, dessen Unterbau im Wesentlichen dem eines konventionellen Kalibriertisches entspricht, sind wie üblich die Aggregate zur Wasserversorgung und Entsorgung und zur Vakuumversorgung angeordnet. Auf dem Kalibriertisch sind jedoch zwei voneinander unabhängige Werkzeugaufnahmen befestigt, die die Kalibrierwerkzeuge tragen.

Als Kalibrierwerkzeuge im Sinn der Erfindung werden Trockenkalibrierwerkzeuge und Kalibrierwannen verstanden. Die Kalibrierwannen sind üblicherweise ais Vakuumtanks ausgeführt, in denen das Profil durch entsprechende Blenden geführt wird, die zur Kalibrierung dienen, wobei das Anliegen des Profils an den Blenden durch das Vakuum im Tank gewährleistet ist. Eine turbulente Strömung von Kühlwasser, das in Längsrichtung der Wanne durch entsprechende Öffnungen in den Blenden geführt wird, gewährleistet eine möglich rasche Abkühlung und Verfestigung des Profilstranges, die für die Erzielung entsprechender Produktionsleistungen erforderlich ist. Die einzelnen Kalibrierwerkzeuge können dabei auf getrennten Werkzeugaufnahmen, die in Längsrichtung hintereinander angeordnet sind, oder auch auf jeweils einer gemeinsamen Werkzeugaufnahme befestigt sein.

Es ist weiters vorzugsweise vorgesehen, dass die beiden Profilstränge im ersten Betriebsmodus durch einen gemeinsamen Raupenabzug mit zwei unabhängig voneinander angetriebenen Raupenpaaren gefördert werden und dass der einzelne Profilstrang zweiten Betriebsmodus von beiden Raupenpaaren gemeinsam gefördert wird. Die Fördergeschwindigkeit des Raupenabzugs definiert die Extrusionsgeschwindigkeit, die der wesentliche Parameter für die erzielbare Leistung einerseits und die Qualität des Profils andererseits ist.

Um auch bei unterschiedlichen Extrusionsgeschwindigkeiten Profilstücke üblicher Länge herstellen zu können, ist in bevorzugter Weise vorgesehen, dass die beiden Profilstränge durch eine Abtrenneinrichtung aus mindestens zwei unabhängig voneinander bewegbaren Sägen oder Messereinrichtungen zu Profilstücken verarbeitet wird. Auf diese Weise ist es möglich, beispielsweise 6 m-Stangen herzustellen, die nach einer Zwischenlagerung nach Beendigung des Schrumpfungsprozesses maßgenau zu Profilabschnitten verarbeitet werden. Es ist jedoch in gleicher Weise möglich, durch die Abtrenneinrichtung die entsprechenden Profilabschnitte in line herzustellen, das heißt, dass die Abtrenneinrichtung bereits die erforderlichen Gehrungen maßgenau erzeugt, wobei der zu erwartende Schrumpfungsprozess in die Bemessung eingerechnet werden muss.

Eine besondere Steigerung der Flexibilität des erfindungsgemäßen Verfahren kann dadurch erreicht werden, dass wahlweise zwei Profilstränge parallel oder lediglich ein einzelner Profilstrang hergestellt werden. Durch eine entsprechende Auslegung der einzelnen Komponenten der Anlage ist es möglich, anstelle von zwei kleineren Profilen ein einzelnes Profil mit kleineren oder aber mit entsprechend großen Abmessungen herzustellen, so dass eine besonders vielseitige Verwendbarkeit der erfindungsgemäßen Extrusionslinie möglich ist.

Weiters betrifft die Erfindung eine Vorrichtung zum Abkühlen und Kalibrieren von Kunststoffprofilen zur Durchführung eines Verfahrens gemäß einem der Patentansprüche 1 bis 3, mit einem Kalibriertisch, auf dem mindestens zwei Werkzeugaufnahmen befestigt sind, die zur lösbaren Befestigung von Kalibrierwerkzeuggruppen dienen.

Erfindungsgemäß ist vorgesehen, dass die Werkzeugaufnahmen unabhängig voneinander in Längsrichtung und vorzugsweise in Querrichtung bewegbar sind und einerseits zur Aufnahme von zwei getrennten Kalibrierwerkzeuggruppen und andererseits koppelbar zur gemeinsamen Aufnahme einer einzigen Kalibrierwerkzeuggruppe ausgebildet sind. Um die erforderlichen Manipulationen an der Extrusionslinie zu ermöglichen, ist es erforderlich, dass die Extrusionswerkzeuge relativ zum Extruder in Längsrichtung beweglich sind. Üblicherweise wird dies dadurch erreicht, dass der gesamte Kallbriertisch in Extrusionsrichtung verfahrbar ist. Auch bei der erfindungsgemäßen Kalibriervorrichtung kann eine solche Beweglichkeit des Kalibriertisches in Längsrichtung vorgesehen sein. Zusätzlich dazu sind jedoch auch die beiden Werkzeugaufnahmen zumindest in Längsrichtung beweglich, um auch Manipulationen an den Werkzeugen für einen Profilstrang zu erleichtern, ohne den Produktionsvorgang am anderen Profilstrang beeinflussen zu müssen. Bevorzugt ist auch eine Beweglichkeit in Querrichtung gegeben, so dass der Abstand der beiden Profilstränge voneinander an die jeweiligen Gegebenheiten anpassbar ist. Als Kalibrierwerkzeuggruppe im obigen Sinn wird die Gesamtheit der Trockenkalibriervorrichtungen und der Kalibriertanks verstanden, die je nach Erfordernissen des jeweiligen Profils in an sich bekannter Weise ausgewählt werden.

In einer besonders bevorzugten Ausführungsvariante der obigen Vorrichtung ist vorgesehen, dass die Werkzeugaufnahmen zur Aufnahme von mindestens einer Trockenkalibriereinrichtung und von mindestens einem Kalibriertank ausgebildet sind. Bei einer solchen Ausführung, bei der eine einzige Werkzeugaufnahme sämtliche Kalibrierwerkzeuge gemeinsam trägt, kann eine besonders einfache und robuste Kalibrierung erreicht werden. Außerdem ist es gegebenenfalls möglich, bei einem Werkzeugwechsel alle Werkzeuge gleichzeitig abzubauen und in gleicher Weise neue Werkzeuge in einem einzigen Schritt aufzubauen.

Besondere Vorteile hinsichtlich der unabhängigen Prozesssteuerung können dadurch erreicht werden, dass für die beiden Kalibrierwerkzeuggruppen unabhängig regelbare Vakuumanschlüsse vorgesehen sind. Weiters ist es besonders günstig, wenn für die beiden Kalibrierwerkzeuggruppen unabhängig regelbare Wasseranschlüsse vorgesehen sind. Auf diese Weise ist es insbesondere möglich, auch unterschiedliche Profile gleichzeitig herzustellen.

Wie oben bereits beschrieben, kann eine besondere Flexibilität der erfindungsgemäßen Extrusionslinie dadurch erreicht werden, dass die beiden Werkzeugaufnahmen zur lösbaren Befestigung einer einzigen Kalibrierwerkzeuggruppe miteinander verbindbar sind.

Weiters betrifft die vorliegende Erfindung vorzugsweise eine Vorrichtung zum Abkühlen und Kalibrieren von Kunststoffprofilen wie oben beschrieben, mit einem Raupenabzug, auf dem zwei Raupenpaare parallel nebeneinander vorgesehen sind und die unabhängig voneinander bewegbar sind, um wahlweise jeweils einen Profilstrang oder gemeinsam einen einzelnen Profilstrang zu fördern und wobei zwischen den beiden Raupenpaaren eine vorzugsweise entfernbare Trennwand vorgesehen ist.

In einer besonders bevorzugten Ausführungsvariante der obigen Vorrichtung ist zwischen den beiden Raupenpaaren eine vorzugsweise entfernbare Trennwand vorgesehen. Aus Gründen der Arbeitssicherheit muss ein Raupenabzug stets mit einer Abdeckung ausgebildet sein, die in geschlossenem Zustand das Hineingreifen in den Raupenabzug verhindert. Entsprechende Sicherheitsschaltungen müssen gewährleisten, dass ein Öffnen der Abdeckung einen sofortigen Stillstand des Raupenpaars bewirkt, um Arbeitsunfälle zu verhindern. Bei dem erfindungsgemäßen Raupenabzug sind zwei Raupenpaare vorgesehen, die von den beiden Seiten her jeweils über eine Abdeckung zugänglich sind. Um unnötige Störungen des jeweilig anderen Produktionsprozesses zu vermeiden, bewirkt das Öffnen jeweils einer Haube nur den Stillstand des darunter befindlichen Raupenpaars. Um das theoretisch mögliche Durchgreifen zu dem anderen sich möglicherweise bewegenden Raupenpaar zu verhindern, ist die oben beschriebene Trennwand vorgesehen. Die Trennwand ist jedoch vorzugsweise entfernbar, um die Raupenpaare zur Förderung eines einzigen Profils miteinander verbinden zu können. In einem solchen Fall ist eine Gefährdung nicht mehr gegeben, da in einem solchen Fall schon bei Öffnen einer einzigen Abdeckung ein Stillstand beider Raupenpaare gewährleistet ist. Die Verbindung der beiden Raupenpaare kann mechanisch durch eine Kupplung oder durch eine entsprechende elektronische Steuerung des Antriebs erfolgen.

In weiterer Folge betrifft die Erfindung vorzugsweise eine Vorrichtung zum Abkühlen und Kalibrieren von Kunststoffprofilen wie oben beschrieben, mit einem Grundkörper, auf dem mindestens drei voneinander unabhängig verfahrbare Abtrenneinrichtungen vorgesehen sind, wobei stromaufwärts oder stromabwärts von zwei unabhängig voneinander verfahrbaren Abtrenneinrichtungen eine dritte Abtrenneinrichtung angeordnet ist.

In an sich bekannter Weise können die Abtrenneinrichtungen als Sägen oder als so genannte Guillotinen ausgebildet sein, die die Profilabschnitte spanlos abtrennen. Wesentlich ist, dass die beiden Abtrenneinrichtungen unabhängig voneinander verfahrbar sind, so dass jeder Profilstrang zu Profilabschnitten der jeweils gewünschten Länge verarbeitet werden kann.

Die Länge einer Extrusionslinie ist im Allgemeinen limitiert. Um hier mögliche Platzprobleme zu vermeiden, ist es insbesondere bevorzugt, wenn zwei Abtrenneinrichtungen nebeneinander angeordnet sind.

Da die Extrusionslinie auch zu Herstellung eines einzigen Profilstranges entsprechender Breite herangezogen werden soll, ist vorgesehen, dass stromaufwärts oder stromabwärts von zwei unabhängig voneinander verfahrbaren Abtrenneinrichtungen die dritte Abtrenneinrichtung angeordnet ist. In einem solchen Fall werden die beiden unabhängig voneinander verfahrbaren Abtrenneinrichtungen stillgelegt, und das einzelne Profil wird durch die dritte Abtrenneinrichtung abgetrennt.

Da in jedem Fall nur entweder die beiden unabhängig verfahrbaren Abtrenneinrichtungen oder die dritte Abtrenneinrichtung in Betrieb sind, nie jedoch alle Abtrenneinrichtungen gemeinsam, können diese auf einem gemeinsamen Grundkörper vorgesehen sein, wobei sich die Verfahrwege der einzelnen Abtrenneinrichtungen überlappen. Auf diese Weise kann eine besondere Platzeinsparung erzielt werden.

In der Folge wird die vorliegende Erfindung anhand der in den Figuren dargestellten Ausführungsbeispiele näher erläutert. Es zeigen:
- Fig. 1: eine Extrusionslinie zur Durchführung des erfindungsgemäßen Verfahrens in einer Seitenansicht;
- Fig. 2: die Extrusionslinie von Fig. 1 im Grundriss;
- Fig. 3, Fig. 4 und Fig. 5: jeweils eine Querschnitt durch eine Vorrichtung zum Abkühlen und Kalibrieren der Profile in unterschiedlichen Betriebszuständen;
- Fig. 6 und Fig. 7: eine erfindungsgemäße Vorrichtung zum Fördern von Kunststoffprofilen in unterschiedlichen Betriebszuständen im Schnitt; und
- Fig. 8: eine Profilsäge im Schnitt.

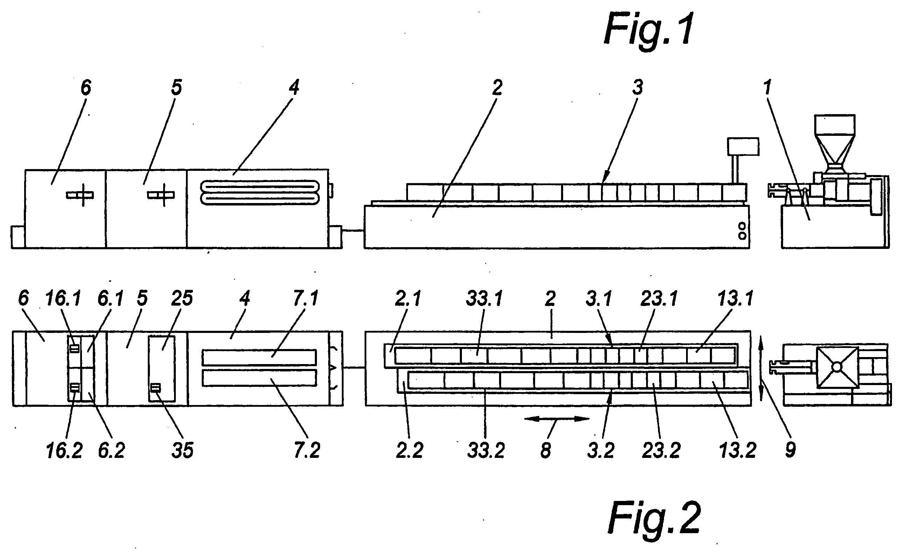

Die Extrusionslinie von Fig. 1 und Fig. 2 besteht aus einem Extruder 1, einem Kalibriertisch 2 zur Aufnahme eines einzelnen Kalibrierwerkzeuges 3 bzw. zweier Kalibrierwerkzeuggruppen 3.1 und 3.2, einem Raupenabzug 4, einer ersten Abtrenneinrichtung 35 und einer zweiten doppelt ausgebildeten Abtrenneinrichtung 6.1, 6.2.

Aus Fig. 2 ist ersichtlich, dass der Kalibriertisch 2 zwei unabhängig voneinander bewegbare Werkzeugaufnahmen 2.1, 2.2 aufweist, auf denen jeweils getrennte Kalibrierwerkzeuggruppen 3.1, 3.2 angeordnet sind. Die Kalibrierwerkzeuggruppen 3.1, 3.2 setzen sich aus mehreren Trockenkalibrierwerkzeugen 13.1, 13.2, einem stromaufwärtigen Kalibriertank 23.1, 23.2 und einem stromabwärtigen Kalibriertank 33.1, 33.2 zusammen. Die Werkzeugaufnahmen 2.1, 2.2 sind sowohl in Längsrichtung, das heißt im Sinne des Doppelpfeils 8, als auch in Querrichtung, das heißt im Sinne des Doppelpfeils 9 unabhängig voneinander bewegbar.

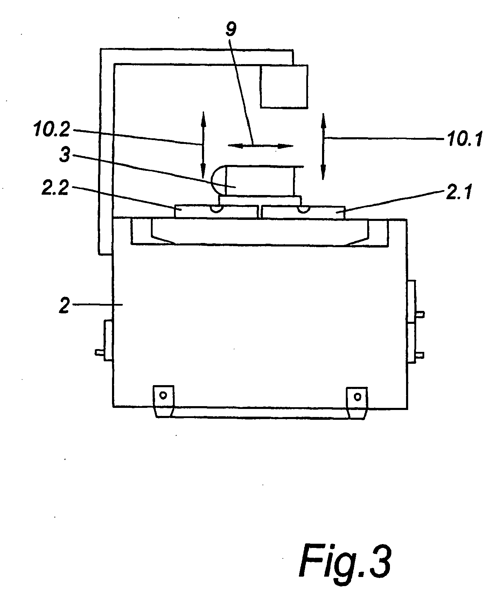

In der Darstellung von Fig. 3 ist ersichtlich, dass die beiden Werkzeugaufnahmen 2.1, 2.2 miteinander gekoppelt werden können, um eine einzelne Kalibrierwerkzeuggruppe 3 zur Kalibrierung eines gewöhnlichen Profils gemeinsam aufnehmen zu können. Aus dieser Figur ist auch ersichtlich, dass die beiden Werkzeugaufnahmen 2.1, 2.2 neben der Beweglichkeit in Querrichtung gemäß Doppelpfeil 9 auch unabhängig voneinander in der Richtung der Doppelpfeile 10.1, 10.2 höhenverstellbar sind.

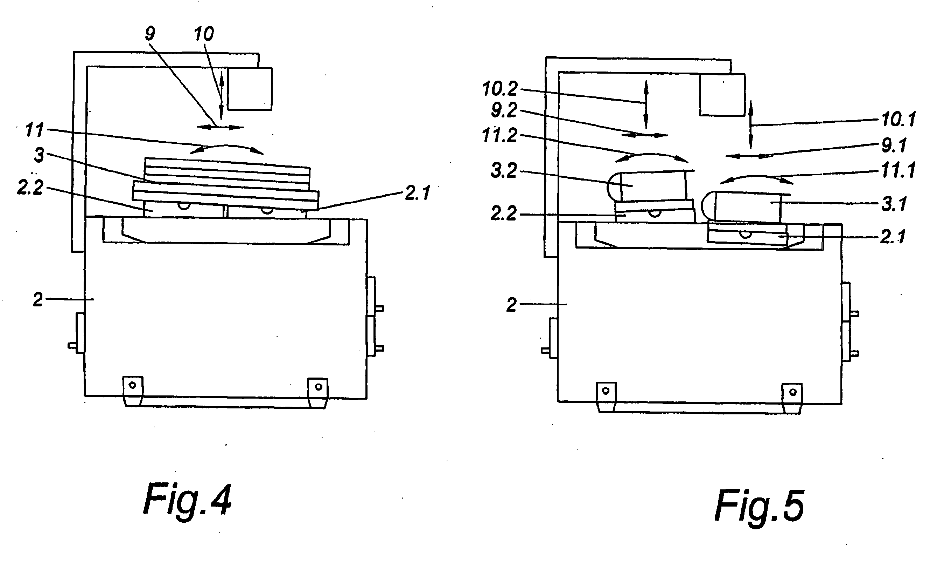

Die Ausführungsvariante von Fig. 4 entspricht der von Fig. 1 mit dem Unterschied, dass auf den Werkzeugaufnahmen 2.1, 2.2 eine Werkzeuggruppe 3 für ein Profil mit besonders großen Abmessungen aufgebaut ist. Um entsprechende Justierungen vornehmen zu können, ist dabei die Einheit aus den Werkzeugaufnahmen 2.1, 2.2 gemeinsam auch in Richtung des Doppelpfeils 11 um die Profilachse verschwenkbar. Die Höhenverstellbarkeit ist durch den gemeinsamen Doppelpfeil 10 dargestellt.

Bei der Ausführungsvariante von Fig. 5 sind auf den Werkzeugaufnahmen 2.1, 2.2 getrennte Kalibrierwerkzeuggruppen 3.1, 3.2 aufgebaut. Diese sind unabhängig voneinander in Richtung der Doppelpfeile 9.1, 9.2; 10.1, 10.2; 11.1, 11.2 seitlich verschiebbar, höhenverstellbar bzw. um die Profilachse schwenkbar.

In dem Kalibriertisch 2 sind die Aggregate zur Wasserversorgung, zur Wasserentsorgung und zur Vakuumversorgung in an sich bekannter Weise angebracht, wobei jedoch für die beiden Kalibrierwerkzeuggruppen 3.1, 3.2 eine unabhängige Regelbarkeit realisiert ist.

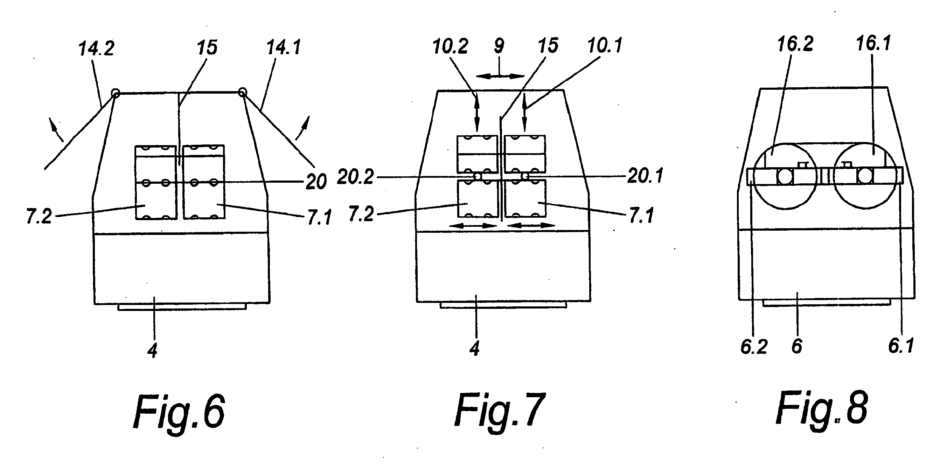

Fig. 6 zeigt einen Querschnitt durch einen Raupenabzug 4, der zwei getrennt ansteuerbare Raupenpaare 7.1, 7.2 aufweist, die nebeneinander angeordnet sind. Der Raupenabzug 4 besitzt zwei Abdeckungen 14.1, 14.2, die geöffnet werden können, um den Zugang zu den Raupenpaaren 7.1, 7.2 zu ermöglichen. In der Darstellung von Fig. 6 sind die Raupenpaare 7.1, 7.2 miteinander gekoppelt, um einen einzigen Profilstrang 20 von entsprechend großen Außenabmessungen zu fördern. Eine Trennwand 15 ist in einem angehobenen Zustand, um nicht mit dem Profilstrang 20 zu kollidieren. Da die Raupenpaare 7.1, 7,2 bewegungsmäßig verbunden sind, ist gewährleistet, dass bei Öffnen einer der Abdeckungen 14.1, 14.2 eine Stilllegung beider Raupenpaare 7.1, 7.2 erfolgt, so dass keine Gefährdung für das Bedienungspersonal gegeben ist.

In Fig. 7 ist eine Verwendung des Raupenabzugs 4 gezeigt, bei der die Raupenpaare 7.1, 7.2 unabhängig voneinander zur Herstellung separater Profilstränge 20.1, 20.2 dienen. Die Trennwand 15 ist bei dieser Betriebsweise zwischen die Raupenpaare 7.1, 7.2 abgesenkt, so dass ein Durchgreifen des Bedienungspersonals durch ein stillstehendes Raupenpaar 7.1, 7.2 zu dem möglicherweise sich bewegenden Raupenpaar 7.2, 7.1 sicher verhindert werden kann.

Fig. 8 zeigt eine Vorrichtung zum Abtrennen von Kunststoffprofilen mit einem Grundkörper 6 und zwei voneinander getrennt in Längsrichtung verfahrbaren Abtrenneinrichtungen 6.1, 6.2 mit jeweils einer Säge 16.1, 16.2. Auf diese Weise können die Profilstränge 20.1, 20.2 unabhängig voneinander abgetrennt werden. Stromaufwärts der in Fig. 8 dargestellten Abtrenneinheit ist eine herkömmliche Vorrichtung zum Abtrennen vorgesehen, bei der auf einem Grundkörper 5 eine Abtrenneinrichtung 25 mit einer Säge 35 vorgesehen ist, um entweder zwei Profilstränge 20.1, 20.2 gleichzeitig oder einen einzelnen Profilstrang 20 abzutrennen.

Die vorliegende Erfindung ermöglicht es, bei vergleichbaren Raumbedarf die Ausstoßleistung einer Extrusionslinie zu verdoppeln, ohne die Nachteile einer starren Koppelung von zwei getrennten Extrusionsprozessen in Kauf nehmen zu müssen. Ein weiterer Vorteil der Erfindung liegt in der erhöhten Flexibilität in Abhängigkeit von den Abmessungen der zu erzeugenden Profile.

## Patentansprüche

1. Verfahren zur Herstellung von Kunststoffprofilen, bei dem zwei Profilstränge (20.1, 20.2) gleichzeitig extrudiert werden, danach jeder der Profilstränge (20.1, 20.2) in jeweils mindestens einem Kalibrierwerkzeug (13.1, 13.2; 23.1, 23.2; 33.1, 33.2) abgekühlt und kalibriert wird, welche auf einem Kalibriertisch (2) befestigt sind, wobei die weitgehend erkalteten Profilstränge (20.1, 20.2) durch jeweils einen Raupenabzug (4) gefördert werden und letztlich in einer Abtrenneinrichtung (25; 6.1, 6.2) zu Profilstücken verarbeitet werde, **dadurch gekennzeichnet, dass** bei der Herstellung der Kunststoffprofile eine Kalibrierwerkzeuggruppe für einen ersten Profilstrang unabhängig von einer Kalibrierwerkzeuggruppe für den zweiten Profilstrang gegenüber dem Kalibriertisch (2) in Längsrichtung verfahren wird.

2. Verfahren nach Anspruch 1, **dadurch gekennzeichnet, dass** die beiden Profilstränge (20.1, 20.2) auf zwei voneinander unabhängigen Extrudern hergestellt werden.

3. Verfahren nach einem der Ansprüche 1 oder 2, **dadurch gekennzeichnet, dass** die beiden Profilstränge (20.1, 20.2) durch eine Abtrenneinrichtung (6.1, 6.2) aus mindestens zwei unabhängig voneinander bewegbaren Sägen (16.1, 16.2) oder Messereinrichtungen zu Profilstücken verarbeitet werden.

4. Vorrichtung zum Abkühlen und Kalibrieren von Kunststoffprofilen gemäß einem Verfahren nach einem der Ansprüche 1 bis 3, mit einem Kalibriertisch (2), auf dem mindestens zwei Werkzeugaufnahmen (2.1, 2.2) befestigt sind, die zur lösbaren Befestigung von Kalibrierwerkzeuggruppen (3.1, 3.2) dienen, **dadurch gekennzeichnet, dass** die Werkzeugaufnahmen (2.1, 2.2) unabhängig voneinander in Längsrichtung und vorzugsweise in Querrichtung bewegbar sind und einerseits zur Aufnahme von zwei getrennten Kalibrierwerkzeuggruppen (3.1, 3.2) und andererseits koppelbar zur gemeinsamen Aufnahme einer einzigen Kalibrierwerkzeuggruppe (3) ausgebildet sind.

5. Vorrichtung nach Anspruch 4, **dadurch gekennzeichnet, dass** die Werkzeugaufnahmen (2.1, 2.2) unabhängig voneinander höhenverstellbar und/oder um ihre Längsachsen schwenkbar sind.

6. Vorrichtung nach einem der Ansprüche 4 oder 5, **dadurch gekennzeichnet, dass** die zwei Werkzeugaufnahmen (2.1, 2.2) in gekoppeltem Zustand gemeinsam in Längsrichtung, in Querrichtung und in vertikaler Richtung verschiebbar und um eine Längsachse schwenkbar sind.

7. Vorrichtung nach einem der Ansprüche 4 bis 6, **dadurch gekennzeichnet, dass** die Werkzeugaufnahmen (2.1, 2.2) zur Aufnahme von mindestens einer Trockenkalibriereinrichtung und von mindestens einem Kalibriertank (23.1, 23.2) ausgebildet sind.

8. Vorrichtung nach einem der Ansprüche 4 bis 7, **dadurch gekennzeichnet, dass** der Kalibriertisch (2) als Ganzes in Längsrichtung verschiebbar ist.

9. Vorrichtung nach einem der Ansprüche 4 bis 8, **dadurch gekennzeichnet, dass** für die beiden Kalibrierwerkzeuggruppen (3.1, 3.2) unabhängig regelbare Vakuumanschlüsse vorgesehen sind.

10. Vorrichtung nach einem der Ansprüche 4 bis 9, **dadurch gekennzeichnet, dass** für die beiden Kalibrierwerkzeuggruppen (3.1, 3.2) unabhängig regelbare Wasseranschlüsse vorgesehen sind.

11. Vorrichtung nach einem der Ansprüche 4 bis 10, **dadurch gekennzeichnet, dass** ein Raupenabzug (4) vorgesehen ist, auf dem zwei Raupenpaare (7.1, 7.2) parallel nebeneinander vorgesehen sind die unabhängig voneinander bewegbar sind, um wahlweise jeweils einen Profilstrang (20.1, 20.2) oder gemeinsam einen einzelnen Profilstrang (20) zu fördern und dass zwischen den beiden Raupenpaaren (7.1, 7.2) eine vorzugsweise entfernbare Trennwand (15) vorgesehen ist.

12. Vorrichtung nach Anspruch 11, **dadurch gekennzeichnet, dass** die Raupenpaare (7.1, 7.2) zur Förderung eines einzigen Profilstrangs (20) miteinander verbindbar sind.

13. Vorrichtung nach Anspruch 11 oder 12, **dadurch gekennzeichnet, dass** der Mittenabstand der beiden Raupenpaare (7.1, 7.2) einstellbar ist.

14. Vorrichtung nach einem der Ansprüche 4 bis 13, **dadurch gekennzeichnet, dass** ein Grundkörper (6) vorgesehen ist, auf dem mindestens drei voneinander unabhängig verfahrbare Abtrenneinrichtungen (6.1, 6.2; 25) vorgesehen sind, wobei stromaufwärts oder stromabwärts von zwei unabhängig voneinander verfahrbaren Abtrenneinrichtungen (6.1, 6.2) eine dritte Abtrenneinrichtung (25) angeordnet ist.

15. Vorrichtung nach Anspruch 14, **dadurch gekennzeichnet, dass** sich die Längsverfahrwege der zwei unabhängig voneinander verfahrbaren Abtrenneinrichtungen (6.1, 6.2) und der dritten Abtrenneinrichtung (25) teilweise überlappen.

16. Vorrichtung nach einem der Ansprüche 14 oder 15, **dadurch gekennzeichnet, dass** die Abtrenneinrichtungen (6.1, 6.2) als Sägen (16.1, 16.2) ausgebildet sind.

17. Vorrichtung nach einem der Ansprüche 14 oder 15, **dadurch gekennzeichnet, dass** die Abtrenneinrichtungen (6.1, 6.2) als Messereinrichtungen ausgebildet sind.

## Claims

1. A method for the producing of plastic profiles, in which two profile streams (20.1, 20.2) are extruded simultaneously, whereupon each profile stream (20.1, 20.2) is cooled and calibrated in at least one calibrating device (13.1, 13.2; 23.1, 23.2; 33.1, 33.2), where the essentially cooled profile streams (20.1, 20.2) are taken off by a caterpillar pulling device (4) and are finally sized to profile sections by a cutting device (25; 6.1, 6.2), **characterized in that** in the production of plastic profiles one group of calibrator tools for a first profile stream is with respect to the calibrator table shifted in longitudinal direction independently of the calibrator tool group for the second profile stream.

2. A method according to claim 1, **characterized in that** the two profile streams (20.1, 20.2) are made by two independent extruder units.

3. A method according to claim 1 or 2, **characterized in that** the two profile streams (20.1, 20.2) are cut into profile sections by a cutting tool (6.1, 6.2) comprising at least two saws (16.1, 16.2) or knives that are moveable independently of each other.

4. A device for the cooling and calibrating of plastic profiles produced by a method according to any of claims 1 to 3, with a calibrator table (2) carrying at least two tool mounting stations (2.1, 2.2) on which the calibrator tool groups (3.1, 3.2) can be detachably mounted, **characterized in that** the tool mounting stations (2.1, 2.2) can be moved independently of each other in longitudinal and preferably in transversal direction, and that they either hold a separate calibrator tool group (3.1, 3.2) each or that they may be coupled in order to jointly support a single calibrator tool group (3).

5. A device according to claim 4, **characterized in that** the tool mounting stations (2.1, 2.2) are height-adjustable and/or tiltable about their longitudinal axes, each independently of the other.

6. A device according to claim 4 or 5, **characterized in that** the two tool mounting stations (2.1, 2.2) in their coupled state can be jointly moved in longitudinal direction, in transversal direction and in vertical direction, and can be tilted about a longitudinal axis.

7. A device according to any of claims 4 to 6, **characterized in that** the tool mounting stations (2.1, 2.2) are configured so as to hold at least one dry calibrator unit and at least one calibrating tank (23.1, 23.2).

8. A device according to any of claims 4 to 7, **characterized in that** the calibrator table (2) as a whole is moveable in longitudinal direction.

9. A device according to any of claims 4 to 8, **characterized in that** independently controlled vacuum connections are provided for the two calibrating tool groups (3.1, 3.2).

10. A device according to any of claims 4 to 9, **characterized in that** independently controlled water supply lines are provided for both calibrating tool groups (3.1, 3.2).

11. A device according to any of claims 4 to 10, **characterized in that** it comprises a caterpillar belt puller (4) on which two pairs of caterpillar belts (7.1, 7.2) are provided parallel side by side which are movable independently of each other, so that each of them will be able to pull off one of two profile streams (20.1, 20.2), or both together a single profile stream (20) and **in that** a preferably removable separating wall (15) is provided between the two caterpillar belt pairs (7.1, 7.2).

12. A device according to claim 11, **characterized in that** the caterpillar belt pairs (7.1, 7.2) can be connected if a single profile stream (20) is to be pulled.

13. A device according to claim 11 or 12, **characterized in that** the distance between the middle axes of the two caterpillar belt pairs (7.1, 7.2) is adjustable.

14. A device according to any of claims 4 to 13 **characterized in that** it comprises a base body (6) on which at least three cutting tools (6.1, 6.2, 25), where a third cutting tool (25) is provided upstream or downstream of two independently moveable cutting tools (6.1, 6.2).

15. A device according to claim 14, **characterized in that** the longitudinal movement paths of the two separately moveable cutting tools (6.1, 6.2) and the third cutting device (25) will overlap.

16. A device according to claim 14 or 15, **characterized in that** the cutting tools (6.1, 6.2) are configured as saws (16.1, 16.2).

17. A device according to claim 14 or 15, **characterized in that** the cutting tools (6.1, 6.2) are configured as knives.

## Revendications

1. Procédé de fabrication de profilé en matière plastique selon lequel on extrude simultanément deux cordons de profilé (20.1, 20.2) et ensuite on refroidit et on calibre chacun des cordons de profilé (20.1, 20.2) dans au moins un outil de calibrage (13.1, 13.2 ; 23.1, 23.2 ; 33.1, 33.2) qui sont fixés sur une table de calibrage (2), les cordons de profilé (20.1, 20.2) très largement refroidis étant transportés chacun par un extracteur à chenilles (4) et pour être finalement traité dans une installation de coupe (25 ; 6.1, 6.2) pour former des éléments de profilé,
**caractérisé en ce que**
pour la fabrication des profilés en matière plastique on déplace un groupe d'outils de calibrage pour un premier cordon de profilés par rapport à la table de calibrage (2), dans la direction longitudinale, indépendamment d'un groupe d'outils de calibrage du second cordon de profilés.

2. Procédé selon la revendication 1,
**caractérisé en ce que**
les deux cordons de profilé (20.1, 20.2) sont fabriqués par deux extrudeuses indépendantes.

3. Procédé selon l'une des revendications 1 ou 2,
**caractérisé en ce que**
les deux cordons de profilé (20.1, 20.2) sont travaillés par une installation de coupe (6.1, 6.2) pour former des morceaux de profilés, avec au moins deux scies (16.1, 16.2) ou installations à couteaux, mobiles indépendamment l'une de l'autre.

4. Dispositif de refroidissement et de calibrage de profilés en matière plastique selon un procédé de l'une des revendications 1 à 3, comportant une table de calibrage (2) sur laquelle sont fixés au moins deux moyens de réception d'outils (2.1, 2.2) servant à la fixation amovible de groupes d'outils de calibrage (3.1, 3.2),
**caractérisé en ce que**
les moyens de réception d'outils (2.1, 2.2) sont mobiles indépendamment l'un de l'autre dans la direction longitudinale et de préférence dans la direction transversale et ils sont réalisés, d'une part pour recevoir deux groupes d'outils de calibrage (3.1, 3.2) séparés et d'autre part ils peuvent être couplés pour recevoir en commun un unique groupe d'outils de calibrage (3).

5. Dispositif selon la revendication 4,
**caractérisé en ce que**
les moyens de réception d'outils (2.1, 2.2) sont réglables en hauteur et/ou peuvent pivoter autour de leur axe longitudinal, indépendamment l'un de l'autre.

6. Dispositif selon l'une des revendications 4 ou 5,
**caractérisé en ce que**
à l'état couplé les deux moyens de réception d'outils (2.1, 2.2) peuvent être déplacés en commun dans la direction longitudinale, dans la direction transversale et dans la direction verticale et être pivotés autour d'un axe longitudinal.

7. Dispositif selon l'une des revendications 4 à 6,
**caractérisé en ce que**
les moyens de réception d'outils (2.1, 2.2) sont réalisés pour recevoir au moins une installation de calibrage à sec et au moins un réservoir de calibrage (23.1, 23.2).

8. Dispositif selon l'une des revendications 4 à 7,
**caractérisé en ce que**
la table de calibrage coulisse globalement dans la direction longitudinale.

9. Dispositif selon l'une des revendications 4 à 8,
**caractérisé par**
des branchements de vide, réglables indépendamment pour les deux groupes d'outils de calibrage (3.1, 3.2).

10. Dispositif selon l'une des revendications 4 à 9,
**caractérisé par**
des branchements d'eau réglables indépendamment pour les deux groupes d'outils de calibrage (3.1, 3.2).

11. Dispositif selon l'une des revendications 4 à 10,
**caractérisé par**
un extracteur à chenilles (4) avec deux paires de chenilles (7.1, 7.2) parallèles l'une à l'autre et mobiles indépendamment l'une de l'autre pour transporter sélectivement chaque fois un cordon de profilé (2.1, 2.2) ou en commun un cordon de profilé (20)
**et par**
une cloison (15), de préférence amovible, entre les deux paires de chenilles (7.1, 7.2).

12. Dispositif selon la revendication 11,
**caractérisé en ce que**
les paires de chenilles (7.1, 7.2) peuvent être reliées pour transférer un unique cordon de profilé (20).

13. Dispositif selon l'une des revendications 11 ou 12,
**caractérisé en ce que**
l'entr'axe des deux paires de chenilles (7.1, 7.2) est réglable.

14. Dispositif selon l'une des revendications 4 à 13,
**caractérisé par**
un corps de base (6) ayant au moins trois installations de coupe (6.1, 6.2, 25) déplaçables indépendamment l'une de l'autre,
une troisième installation de coupe (25) étant disposée en amont ou en aval des deux installations de coupe (6.1, 6.2) mobiles indépendamment l'une de l'autre.

15. Dispositif selon la revendication 14,
**caractérisé en ce que**
les chemins de déplacement longitudinal des deux installations de coupe (6.1, 6.2) mobiles indépendamment l'une de l'autre et de la troisième installation de coupe (25) se chevauchent partiellement.

16. Dispositif selon l'une des revendications 14 ou 15,
**caractérisé en ce que**
les installations de coupe (6.1, 6.2) sont des scies (16.1, 16.2).

17. Dispositif selon l'une des revendications 14 ou 15,
**caractérisé en ce que**
les installations de coupe (6.1, 6.2) sont des installations à couteaux.
